Europäisches Patentamt

European Patent Office

Office européen des brevets

(19)

(11) Numéro de publication : **0 490 791 A1**

# (12) DEMANDE DE BREVET EUROPEEN

(21) Numéro de dépôt : **91420437.5**

(22) Date de dépôt : **09.12.91**

(51) Int. Cl.⁵ : **H01M 4/52**

(30) Priorité : **13.12.90 FR 9015885**

(43) Date de publication de la demande :
**17.06.92 Bulletin 92/25**

(84) Etats contractants désignés :
**BE CH DE ES FR GB IT LI NL SE**

(71) Demandeur : **SORAPEC S.A.**
**192, rue Carnot**
**F-94120 Fontenay-sous-Bois (FR)**

(72) Inventeur : **Bronoel, Guy**
**13, rue Jean de la Bruyère**
**F-78000 Versailles (FR)**
Inventeur : **Tassin, Noelle**
**1, rue Beauséjour**
**F-94120 Fontenay-sous-Bois (FR)**
Inventeur : **Potier, Thierry**
**23, rue des Bleuets**
**F-93330 Neuilly-sur-Marne (FR)**

(74) Mandataire : **Moinas, Michel**
**Cabinet Michel Moinas 13 Chemin du Levant**
**F-01210 Ferney-Voltaire (FR)**

(54) **Electrode positive de nickel.**

(57)    L'électrode positive de nickel présente une structure en mousse de nickel alvéolée remplie d'une pâte à base d'hydroxyde de nickel. La pâte contient, en matières sèches et pour cent parties pondérales d'hydroxyde de nickel :
   — 7 à 8 parties pondérales de nickel métal pulvérulent,
   — 5 à 12 parties pondérales d'un hydroxyde et/ou sel de cobalt, les parties pondérales étant exprimées sous forme d'équivalents de cobalt métal.

EP 0 490 791 A1

La présente invention se rapporte à une électrode positive de nickel, notamment pour accumulateur alcalin, ainsi qu'à un procédé de fabrication d'une telle électrode.

Les électrodes positives de nickel destinées aux accumulateurs alcalins tels que Ni-Cd, Ni-Zn, Ni-Fe, etc... ont été jusqu'à ces dernières années élaborées suivant deux techniques.

La première, la plus anciennement mise au point, consiste à tasser la matière active, en l'occurrence l'hydroxyde $Ni(OH)_2$, mélangée à un conducteur additionnel dans une pochette métallique dont les parois sont perforées de telle façon que l'électrolyte puisse imbiber la matière active mais que cette dernière ne puisse ressortir de la pochette. De telles électrodes peuvent être produites à coût de production relativement bas, mais ont l'inconvénient d'avoir des caractéristiques massiques (Ah/kg) peu intéressantes et d'être inaptes à des régimes sévères de charge et décharge.

Aussi a-t-on considéré comme un progrès la mise au point du procédé de réalisation d'électrodes à support fritté ou fibreux où l'introduction de la matière active est réalisée par précipitation chimique ou électrochimique. En effet, de telles électrodes se révèlent aptes à restituer une fraction importante de leur capacité nominale, même lorsqu'elles sont soumises à des régimes de décharge aussi rapides que 17 C (décharge en 1/17ème d'heure).

Il faut souligner toutefois que l'imprégnation par précipitation chimique nécessite une durée importante (plusieurs dizaines d'heures). A cet égard, l'imprégnation électrochimique est avantageuse puisque cette opération peut être réalisée en une durée de l'ordre de 1 heure pour des capacités surfaciques de l'ordre de 40 mAh/cm$^2$.

Durant la dernière décennie de nombreuses recherches ont été menées afin de mettre au point un procédé continu par empâtage mécanique pour l'introduction de la matière active dans un support. Les exposés d'invention US 4 217 939 et US 4 251 603 (Matsushita) et FR 2 618 949 (Sanyo) décrivent des procédés d'introduction d'une pâte à base de $Ni(OH)_2$ dans des structures tridimensionnelles du type mousse. Par ailleurs, il apparaît dans beaucoup de travaux, notamment les exposés précités et FR 2 567 326 (Wonder) qu'un bon rendement sur la matière active ne peut être obtenu que dans la mesure où à l'hydroxyde de Ni est ajouté un conducteur additionnel qui est généralement de la poudre de Ni.

Dans les exposés JP-A-52036732 (Matsushita) et JP-A-6251157 (Shin Kobe Electric Match), il est fait état de l'emploi d'une pâte à base d'hydroxyde de nickel et de nickel carbonyle, respectivement de nickel métallique, contenant de l'hydroxyde de cobalt.

Dans le cas de Wonder, la poudre de $Ni(OH)_2$ est accompagnée d'une poudre conductrice de nickel carbonyle ou de graphite. Il a été signalé enfin l'avantage apporté par l'immersion de l'électrode dans du sulfate de cobalt quant au rendement en charge de $Ni(OH)_2$.

L'invention part de la constatation faite par la Demanderesse, qu'après plusieurs cycles de charge et décharge, le cobalt ajouté est en fait transformé en hydroxyde $Co(OH)_2$ intimement mélangé à $Ni(OH)_2$.

L'invention a donc trait à une électrode positive de nickel, présentant une structure en mousse de nickel alvéolée remplie d'une pâte à base d'hydroxyde de nickel. La pâte contient, en matières sèches et pour cent parties pondérales d'hydroxyde de nickel :

- 7 à 18 parties pondérales de nickel métal pulvérulent,
- 5 à 12 parties pondérales d'un sel de cobalt, seul ou en mélange avec de l'hydroxyde de cobalt, les parties pondérales étant exprimées sous forme d'équivalents de cobalt métal.

Pour des raisons de tenue mécanique et de viscosité de la pâte, la pâte contient aussi, avantageusement,

- 3 à 8 parties pondérales de polytétrafluoroéthylène,
- 1 à 3 parties pondérales de méthylcellulose.

La détermination de la teneur optimale en cobalt constitue donc un aspect de l'invention dont un autre aspect est un procédé d'incorporation du sel de cobalt dans la pâte.

Ce procédé se caractérise en ce qu'on introduit la pâte dans la mousse de nickel alvéolée par pressage mécanique, le sel de cobalt, seul ou en mélange avec l'hydroxyde de cobalt, étant en phase aqueuse.

De préférence, la pâte est chauffée à une température comprise entre 50 et 80°C avant introduction dans la mousse de nickel, afin de la stabiliser.

Les propriétés de l'électrode positive de nickel, notamment en ce qui concerne le rendement sur $Ni(OH)_2$ pour des régimes de décharges sévères, dépendent essentiellement des possibilités de drainage des électrons vers le collecteur (la structure de l'électrode) au lieu de la réaction. L'utilisation d'un collecteur tridimensionnel, du type mousse, est de ce point de vue plus avantageux que le recours à un collecteur de type plaque perforée.

Cependant, l'utilisation d'un collecteur de type mousse ne suffit pas à assurer une collecte correcte des charges en l'absence d'une poudre de Ni dispersée dans $Ni(OH)_2$, qui facilite la percolation des électrons. La poudre de Ni étant un composant relativement onéreux, il convient d'en minimiser la teneur dans la masse active.

La Demanderesse a ainsi établi, autre aspect de l'invention, qu'en choisissant des mousses de Ni dont les dimensions d'alvéoles sont suffisamment petites, on pouvait minimiser la teneur en poudre de Ni tout en obtenant des caractéristiques de rendement à fort régime de décharge. Il apparaît que ce rendement est d'autant meilleur, pour une teneur minimale en poudre de Ni, que le diamètre moyen des alvéoles de la mousse est plus petit.

En revanche, plus le diamètre des alvéoles est petit, plus l'opération consistant à remplir rapidement et complètement la mousse avec la pâte est difficile.

D'où un compromis et un optimum selon lesquels les alvéoles de la mousse de nickel ont de préférence un diamètre moyen compris entre 0,1 et 0,4 millimètres, par exemple 0,2 mm, soit une mousse de caractéristique 100 ppi (pores par pouce).

D'où un autre compromis et optimum selon lesquels le nickel métal pulvérulent se présente avantageusement sous forme d'une poudre de diamètre moyen compris entre 1 et 5 micromètres.

Comme dérivé de cobalt introduit dans la pâte, on peut choisir le sulfate sous forme par exemple de $CoSO_4$, $7H_2O$ ou un mélange de ce sulfate avec l'hydroxyde $Co(OH)_2$.

Le sulfate de cobalt est ajouté en solution aqueuse, tandis que l'hydroxyde de cobalt, s'il y a lieu, est ajouté en suspension aqueuse, plus ou moins épaisse.

Avantageusement, les 5 à 12 parties d'hydroxyde et/ou sel de cobalt comprennent, exprimées en équivalents de cobalt métal :
- 2,5 à 4,5 parties pondérales d'hydroxyde de cobalt,
- 2,5 à 7,5 parties pondérales de sulfate, sous forme de $CoSO_4$, $7H_2O$.

L'invention sera mieux comprise en référence aux exemples suivants, donnés à titre purement illustratif et non limitatif.

### Exemples 1 et 2

On part d'un support qui est une mousse de Ni de marque Metapore MN100 (100 ppi) vendu par EPCI, de porosité très élevée ayant des ouvertures moyennes d'alvéoles de l'ordre de 0,2 mm. L'épaisseur initiale de la mousse de Ni est choisie en fonction de la capacité surfacique recherchée, soit :

pour 25 mAh/cm2, e _ 1,7 mm, -exemple 1-
pour 46 mAh/cm2, e _ 2,5 mm, -exemple 2-

On prépare à l'aide d'un mélangeur une pâte dont la composition est la suivante :
- 66,8 % de $Ni(OH)_2$ d'une qualité "pour utilisations électrochimiques" correspondant par exemple aux variétés fournies par la société MHO sous la marque Hoboken. Cet hydroxyde contenant 3,5 % de Co sous la forme d'hydroxyde,
- 8,3 % de poudre de Ni de diamètre moyen 3 micromètres,
- 19,9 % de $CoSo_4$, $7H_2O$ sous la forme de solution à 500 g/dm³,
- 1 % de méthylcellulose,
- 4 % de polytétrafluoroéthylène (PTFE) sous la forme d'une suspension aqueuse à 60 %.

Dans une seconde phase on chauffe la pâte ainsi obtenue par étuvage entre 50 et 80° C. Cette opération a pour but de stabiliser la pâte par fibrillisation du PTFE.

Dans une troisième phase on rehomogénéise cette pâte par malaxage, puis on ajoute 16 g d'$H_2O$ pour 40 g de mélange sec de telle façon que soit obtenue une pâte de consistance adéquate pour son introduction par pressage et/ou par trempage dans la mousse, cet empâtage étant avantageusement réalisé en opérant à partir de chaque face.

Suivant l'exemple 1, on réalise ainsi des électrodes de capacité surfacique, telle que déterminée par décharge à 0,2 C, de l'ordre de 23 mAh/cm². Au régime de décharge nominal (0,2 C) le rendement sur $Ni(OH)_2$ est de 1. En décharge au régime 15 C, on constate que la capacité restituée est de 13,8 mAh/cm2 (soit 60% de la capacité nominale).

Les électrodes réalisées selon l'exemple 2 ont, dans les mêmes conditions, une capacité surfacique de 46 mAh/cm².

### Exemple comparatif 1

On procède comme décrit à l'exemple 2 (épaisseur de 2,5 mm) en remplaçant la pâte contenant $CoSO_4$, $7H_2O$ par une pâte contenant une poudre de à raison de 5% Co en poids par rapport à $Ni(OH)_2$.

La capacité surfacique obtenue, déterminée par décharge au régime 0,2 C, n'est que de 40 mAh/cm² et le rendement n'est que de 0,9.

### Exemple comparatif 2

On procède suivant le mode opératoire décrit à l'exemple 2 (épaisseur de 2,2 mm) en utilisant une pâte contenant $Co(OH)_2$ au lieu de $CoSO_4$, $7H_2O$ et ayant la composition suivante :
- 81,1 % de $Ni(OH)_2$ d'une qualité pour "utilisations électrochimiques",
- 10,0 % de poudre de Ni,
- 3,9 % de $Co(OH)_2$,
- 1% de méthylcellulose, et
- 5 % de polytétrafluoroéthylène.

Comme pour l'exemple comparatif 1, la capacité surfacique obtenue, déterminée par décharge au régime 0,2 C, n'est que de 40 mAh/cm² et le rendement n'est que de 0, 9.

### Revendications

1. Electrode positive de nickel, présentant une structure en mousse de nickel alvéolée remplie d'une pâte à base d'hydroxyde de nickel, caractérisée en ce que la pâte contient, en matières sèches et pour cent parties pondérales d'hydroxyde de nickel :

- 7 à 18 parties pondérales de nickel métal pulvérulent,
- 5 à 12 parties pondérales d'un sel de cobalt, seul en mélange avec de l'hydroxyde de cobalt, les parties pondérales étant exprimées sous forme d'équivalents de cobalt métal.

2. Electrode selon la revendication 1, caractérisée en ce que la pâte contient également :
   - 3 à 8 parties pondérales de polytétrafluoroéthylène,
   - 1 à 3 parties pondérales de méthylcellulose.

3. Electrode selon la revendication 1 ou 2, caractérisée en ce que les alvéoles de la mousse de nickel ont un diamètre moyen compris entre 0,1 et 0,4 mm.

4. Electrode selon la revendication 1 ou 2, caractérisée en ce que le nickel métal pulvérulent se présente sous la forme d'une poudre de diamètre moyen compris entre 1 et 5 micromètres.

5. Electrode selon la revendication 1 ou 2, caractérisée en ce que le sel de cobalt est du sulfate de cobalt.

6. Electrode selon la revendication 1 ou 2, caractérisée en ce que les 5 à 12 parties du sel de cobalt, seul ou en mélange avec l'hydroxyde de cobalt comprennent, exprimées en équivalents de cobalt métal,
   - 2,5 à 4,5 parties pondérales d'hydroxyde de cobalt ;
   - 2,5 à 7,5 parties pondérales de sulfate de cobalt, sous forme de $CoSO_4$, $7H_2O$.

7. Procédé de fabrication d'une électrode selon la revendication 1 ou 2, caractérisé en ce qu'on introduit la pâte dans la mousse de nickel alvéolée par pressage mécanique, le sel de cobalt, seul ou en mélange avec l'hydroxyde de cobalt, étant en phase aqueuse.

8. Procédé selon la revendication 7, caractérisé en ce qu'avant introduction dans la mousse de nickel, la pâte est chauffée à une température comprise entre 50 et 80°C.

EP 0 490 791 A1

Office européen
des brevets

**RAPPORT DE RECHERCHE EUROPEENNE**

Numero de la demande

EP 91 42 0437

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | DATABASE WPI, no.77-31715Y, Derwent Publications Ltd, London, GB; & JP-A-52 036 732 (MATSUSHITA ELEC. IND.) 22-03-1977 * en entier * | 1,3 | H 01 M    4/52 |
| A | * en entier * | 2 | |
| D,A | PATENT ABSTRACTS OF JAPAN, vol. 11, no. 237 (E-528)[2684], 4 Août 1987; & JP-A-62 051 157 (SHIN KOBE ELECTRIC MACH CO. LTD) 05-03-1987 * en entier * | 1 | |
| A | PATENT ABSTRACTS OF JAPAN, vol. 9, no. 310 (E-364)[2033] 6 Décembre 1985; & JP-A-60 146 453 (MATSUSHITA DENKI SANGYO) 02-08-1985 * en entier * | 1 | |
| A | DE-A-2 738 386   (YARDNEY ELECTRIC CORP) * page 8, paragraphe 2; exemples 1,4 * | 1 | **DOMAINES TECHNIQUES RECHERCHES (Int. Cl.5)**<br><br>H 01 M |

Le présent rapport a été établi pour toutes les revendications

| Lieu de la recherche | Date d'achèvement de la recherche | Examinateur |
|---|---|---|
| LA HAYE | 27-03-1992 | ANDREWS M.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)

5